# EUROPEAN PATENT APPLICATION

(11) **EP 4 671 940 A1**
(43) Date of publication of application: **31.12.2025**
(21) Application number: 24759794.1
(22) Date of filing: 23.02.2024
(51) Int. Cl.: G06F 3/0482, G06F 3/0483, G06F 3/04842, G06F 3/04847, G06Q 30/0601

(54) **INTERACTION METHOD AND APPARATUS, AND ELECTRONIC DEVICE AND STORAGE MEDIUM**

(30) Priority: 23.02.2023 CN 202310190406
(71) Applicant: BEIJING YOUZHUJU NETWORK TECHNOLOGY CO. LTD., Beijing 101299 (CN)
(72) Inventor: LUO, Yongliang, Beijing 100028 (CN); ZHOU, Man, Beijing 100028 (CN); XU, Qin, Beijing 100028 (CN); MENG, Hao, Beijing 100028 (CN); LI, Xin, Beijing 100028 (CN); WANG, Yuchen, Beijing 100028 (CN); YU, Hang, Beijing 100028 (CN); LIU, Zeyu, Beijing 100028 (CN); ZHANG, Xin, Beijing 100028 (CN); YANG, Xiao, Beijing 100028 (CN)
(74) Representative: Grünecker Patent- und Rechtsanwälte PartG mbB
(86) International application number: PCT/CN2024/078458
(87) International publication number: WO 2024/175122

(57) **Abstract**

The present disclosure relates to an interaction method, device, electronic apparatus and storage medium, and the method comprising: displaying a first feed in a feed interface; switching the first feed in the feed interface to a second feed in response to a trigger on the feed interface; the second feed includes change information of target attribute of an object to be recommended; the object to be recommended is an object in a set of objects to be processed, and the change information of the target attribute of the object to be recommended meets a preset condition; displaying an object summary display page in response to a first selection on the second feed, where the object summary display page includes attribute information of an object to be processed in the set of objects to be processed. The purpose of transparent transmission of the change condition of the target feature attribute information of the object to be recommended can be achieved.

## Description

This application claims the priority to Chinese Patent Application No. 202310190406.X, entitled "INTERACTION METHOD, DEVICE, ELECTRONIC APPARATUS, AND STORAGE MEDIUM," and filed on February 23, 2023, which is incorporated herein by reference in its entirety.

### FIELD

The present disclosure relates to the field of human-computer interaction technologies, and in particular, to an interaction method, device, electronic apparatus, and storage medium.

### BACKGROUND

With the continuous development of content recommendation type APP (Application) related technologies, people have increasingly diverse demands for related functions of content recommendation applications, especially information display manners and display content that are closely related to use experience of people.

Therefore, how to meet the functional requirements of the user diversified content recommendation type APP, thereby improving the user experience, is a technical problem to be solved urgently.

### SUMMARY

In order to solve or at least partially solve the above technical problems, the present disclosure provides an interaction method, device, electronic apparatus, and storage medium.

In a first aspect, the present disclosure provides an interaction method, including:
displaying a first feed in a feed interface;
in response to a trigger on the feed interface, switching the first feed in the feed interface to a second feed; the second feed comprising change information of a target attribute of an object to be recommended; the object to be recommended being an object in a set of objects to be processed, and the change information of the target attribute of the object to be recommended meeting a preset condition;
in response to a first selection on the second feed, displaying an object summary display page, the object summary display page comprising attribute information of an object to be processed in the set of objects to be processed.

In a second aspect, the present disclosure further provides an interaction device, including:
a first display module for displaying a first feed in a feed interface ;
a switching module for in response to a trigger on the feed interface, switching the first feed in the feed interface to a second feed; the second feed comprising change information of a target attribute of an object to be recommended; the object to be recommended being an object in a set of objects to be processed, and the change information of the target attribute of the object to be recommended meeting a preset condition;
a second display module for in response to a first selection on the second feed, displaying an object summary display page, the object summary display page comprising attribute information of an object to be processed in the set of objects to be processed.

In a third aspect, the present disclosure further provides an electronic device, including:
one or more processors;
a storage device, configured to store one or more programs;
the one or more programs, when executed by the one or more processors, cause the one or more processors to implement the interaction method as described above.

In a fourth aspect, the present disclosure further provides a computer-readable storage medium having a computer program stored thereon, the program, when executed by a processor, implements the interaction method as described above.

Compared with the prior art, the technical solutions provided by the embodiment of the present disclosure have the following advantages:

According to the technical solutions provided by the embodiment of the present disclosure, by configuring to: switch the first feed in the feed interface to the second feed in response to the trigger operation on the feed interface, where the second feed comprises change information of target attribute of an object to be recommended, where the object to be recommended is an object in the set of objects to be processed, and the change information of the target attribute of the object to be recommended meets a preset condition; display the object summary display page in response to the first selection on the second feed, where the object summary display page comprises attribute information of the object to be processed in the set of objects to be processed, the substance of which is presenting the change information of target attribute of the object to be recommended in the feed interface in a flow manner, so that the user does not need to specially enter the object summary display page to check which objects have changed target attributes, thereby in the process of browsing the feed, the target attribute of which objects in the set of objects to be processed have been changed can be quickly understood, the purpose of transparent transmission of the change condition of the target attribute of the object to be recommended can be achieved, and then the interest of further processing the object to be recommended by the user can be stimulated.

### BRIEF DESCRIPTION OF DRAWINGS

The drawings herein are incorporated in and constitute a part of this specification, illustrating embodiments consistent with the present disclosure and, together with the specification, serve to explain the principles of the present disclosure.

In order to more clearly illustrate the technical solutions in the embodiments of the present disclosure or in the prior art, the accompanying drawings used in the description of the embodiments or the prior art will be briefly introduced below, and it is obvious to those skilled in the art that other drawings may be obtained according to these drawings without creative labor.
FIG. 1 is a flowchart of an interaction method provided in an embodiment of the present disclosure;
FIG. 2 is a schematic diagram of a client display interface provided in an embodiment of the present disclosure;
FIG. 3 is a schematic diagram of another client display interface provided in an embodiment of the present disclosure;
FIG. 4 is a schematic diagram of another client display interface provided in an embodiment of the present disclosure;
FIG. 5 is a schematic diagram of another client display interface provided in an embodiment of the present disclosure;
FIG. 6 is a schematic diagram of another client display interface provided in an embodiment of the present disclosure;
FIG. 7 is a schematic diagram of another client display interface provided in an embodiment of the present disclosure;
FIG. 8 is a schematic diagram of another client display interface provided in an embodiment of the present disclosure;
FIG. 9 is a schematic diagram of another client display interface provided in an embodiment of the present disclosure;
FIG. 10 is a schematic diagram of another client display interface provided in an embodiment of the present disclosure;
FIG. 11 is a schematic structural diagram of an interaction device in an embodiment of the present disclosure;
FIG. 12 is a schematic structural diagram of an electronic apparatus in an embodiment of the present disclosure.

### DETAILED DESCRIPTION

In order to be able to more clearly understand the above objects, features and advantages of the present disclosure, the solutions of the present disclosure will be further described below. It should be noted that, in the case of no conflict, the features in the embodiments and the embodiments of the present disclosure may be combined with each other.

Many specific details are set forth in the following description to facilitate a thorough understanding of the present disclosure, but the present disclosure may also be implemented in other ways other than those described herein; it is apparent that the embodiments in the specification are only a portion, not all, of the embodiments of the present disclosure.

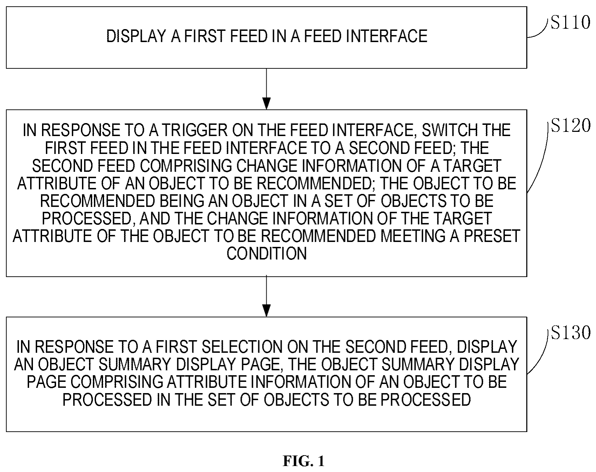

FIG. 1 is a flowchart of an interaction method provided in an embodiment of the present disclosure, the present embodiment may be applied to a case in which a user interacts with a client, the method may be performed by an interaction device, the device may be implemented in a manner of software and/or hardware, and the device may be configured in an electronic apparatus, for example, a terminal, including but not limited to a smart phone, a palmtop computer, a tablet computer, a wearable apparatus with a display screen, a desktop computer, a notebook computer, an all-in-one machine, a smart home apparatus, and the like.

As shown in FIG. 1, the method may specifically include:
S110: Displaying a first feed in a feed interface.

The feed interface refers to a page or an area in an application program client used to display feeds in a feed playback sequence.

A feed playback sequence is a data form for continuously providing content to a user. The feed playback sequence includes a group of information/content. A group of information/content includes a plurality of information/content, and the plurality of information/content is sequentially arranged in a certain order to form a feed playback sequence.

**The** feed refers to each of information/content in the feed playback sequence. A feed playback sequence is a collection formed from multiple feeds. Exemplarily, if the feed playback sequence is a group of videos, each of the videos is a feed.

**In** some embodiments, types of different feeds in a same feed playback sequence may be the same or different. Types of feeds may include, but are not limited to, live preview videos, live videos, short videos, and graphic and text information, etc. Wherein, the live preview video may be, for example, a video used to attract traffic to a live room. The live video may be, for example, a video that reflects the content being broadcast in the live room. The short video may be, for example, a short form video. For example, the graphic and text information may recommend some content to the user, for example, a recommended application program, or a recommended page mini-game, etc.

In some embodiments, the user may interact with the feed. For example, when a user can trigger a specific area, a control, a picture, an option, or a text in the feed by clicking or the like, the feed may present a corresponding response effect. In other embodiments, the user may not interact with the feed. For example, when a user cannot trigger a certain area, a control, a picture, an option, and a text in the feed by clicking and the like, the feed is caused to present a corresponding response effect.

Since the feeds in the feed playback sequence are arranged in a certain order. In some embodiments, according to the user's switching operation on the feed, the feeds in the feed playback sequence will be sequentially displayed in order in the feed interface.

In this application, the feed displayed by the feed interface includes at least a first feed and a second feed. The first feed and the second feed provide different content to the user. The type of the first feed and the type of the second feed may be the same or different, which is not limited in this application. Exemplarily, the first feed is a short video, and the type of the second feed is graphic and text information. Alternatively, the first feed is a live preview video, and the type of the second feed is graphic and text information.

S120: Switching the first feed in the feed interface to a second feed in response to a trigger on the feed interface; the second feed includes change information of a target attribute of the object to be recommended; the object to be recommended is an object in the set of objects to be processed, and the change information of the target attribute of the object to be recommended meets a preset condition.

The purpose of the trigger operation on the feed interface is to switch the feed displayed in the feed interface. Optionally, the trigger operation on the feed interface includes, but is not limited to, a click operation or a sliding operation on the feed interface. Further, the triggering operation on the feed interface may be set to include an operation of sliding along a specified direction in the feed interface.

Switching the first feed in the feed interface to the second feed can be, for example, displaying the second feed, and no longer displaying the first feed in the feed interface.

The object may be, for example, a thing. The object to be recommended refers to an object that is intended to be recommended and displayed to the user by virtue of the second information.

Further, the object may be, for example, a commodity. Specifically, the object may include a purchasable item or service, or the like.

The object includes plurality kinds of attributes. An attribute of an object may be, for example, a feature possessed by the object's structure and composition. If the object is an item, its attribute is the name, style, size, material, function, trademark, type, price, color and packaging of the object. If the object is a service, its attribute is content included in the object, notice, etc.

Optionally, if the object is a commodity, the attribute of the object may also be a value or a level reflecting a popularity of the object. For example, the quantity of follows, the quantity of bookmarks, the quantity of purchases, the quantity of comments, the quantity of shares, the quantity of browses, the quantity of consultations, and the quantity of likes of the object.

Optionally, the attribute of the object may also be a feature formed by operations of the user. For example, the time since the object was added to the shopping cart by the user.

The attribute of the object reflects the attraction of the object to the user. The attribute of the object are primary stimuli that can affect user cognitive, emotion, and behavior.

The target attribute is one or more of the attributes that the object possesses. The present application does not limit what the target attribute specifically refers to. Over time, the target attribute may change. Exemplarily, the target attribute may be a price, a value or a level reflecting a popularity, and the like.

The change information of target attribute may be, for example, information describing a change condition of the target attribute. Exemplarily, the target attribute is a price, the change information of target attribute is information that describes that the price is reduced from A to B, or information about a price reduction amplitude of the current price relative to a certain time node, or information that describes the current price as the lowest price within a set time period starting from the current time to previous time.

In some embodiments, the second feed includes a commodity card of the object to be recommended, and any of the change information of target attribute of the object to be recommended is located in a commodity card of this object to be recommended. The commodity card may be, for example, an area for summarizing and displaying at least part of the attributes of an object.

Optionally, the commodity card of the object to be recommended further includes identification information of the object to be recommended. The identification information of the object to be recommended refers to information that distinguishing an object to be recommended from other objects to be recommended. For example, the identification information of the object to be recommended includes a name and/or an image of the object to be recommended.

The set of objects to be processed is a pre-specified set, and exemplarily, the set of objects to be processed may be a set of objects determined by historical behavior records of the user. The historical behavior record of the user includes, but is not limited to, a historical bookmark record for the object by the user, a historical follow record for the object by the user, a historical add-to-cart record for the object by the user, a historical consultation record for the object by the user, a historical query record for the object by the user, or a historical follow record for a person by the user.

In some embodiments, the set of objects directly related to the historical behavior record of the user may be considered as the set of objects to be processed. For example, in a historical process in which a user browses a commodity, a preferred commodity is added to the bookmarks, and this scenario may be considered as the historical browsing behavior record of the user directly relating to the commodity in the bookmarks, and therefore, the set formed by the commodities in the bookmarks is considered as the set of objects to be processed.

In some other embodiments, associative migration may be performed based on historical behavior records of the user, to obtain a plurality of candidate objects, and the set constituted by the plurality of candidate objects is considered as the set of objects to be processed. For example, the user has followed the expert C, the expert C recommends the commodity D and the commodity E, then the commodity D and the commodity E is considered as candidate objects. The set formed by the commodity D and the commodity E is considered as a set of objects to be processed. For another example, if a user belongs to a group, commodities bookmarked by other users in the group may be considered as candidate objects, and then a set of objects to be processed including a plurality of candidate objects is obtained. For another example, if a user bookmarked a commodity F, other commodities that are the same, similar, or may be matched with the commodity F may be considered as candidate objects, and then a set of objects to be processed including a plurality of candidate objects is obtained.

In summary, optionally, the set of objects to be processed includes at least one of the following: a set of objects historically bookmarked by the user, a set of objects historically followed by the user, a set of objects historically added to cart by the user, a set of objects historically consulted by the user, a set of objects historically queried by the user, a set of objects bookmarked by a group to which the user belongs, a set of objects followed by a group to which the user belongs, a set of objects added to cart by a group to which the user belongs, a set of objects consulted by a group to which the user belongs, a set of objects queried by a group to which the user belongs, a set of objects bookmarked by a person that the user has historically followed, a set of objects followed by a person that the user has historically followed, a set of objects added to cart by a person that the user has historically followed, a set of objects consulted by a person that the user has historically followed, a set of objects queried by a person that the user has historically followed, a set of objects of the same type as the objects historically bookmarked by the user, a set of objects of the same type as the objects historically added to cart by the user, a set of objects of the same type as the objects historically consulted by the user, and a set of objects of the same type as the objects historically queried by the user.

"The change information of the target attribute of the object to be recommended meets the preset condition" means that a preset condition is used as a screening condition, and a part of objects are screened out from the set of objects to be processed, and the screened-out objects are used as objects to be recommended.

The reason for the screening out is that, when the number of objects in the set of objects to be processed is numerous, the object with a higher degree of interest of the user can be selected through the screening, and the hit rate of the interest point of the user can be improved.

There are multiple ways to set a preset condition, which is not limited in this application. Exemplarily, the setting may be based on a change condition (such as a change manner, a change amplitude, and the like) of the target attribute. For example, if the target attribute is the price, the preset condition may be set to include that the price of the commodity at the moment of adding it to the cart is higher than the price of the commodity at the current moment; or the preset condition may be set to include that the ratio of the price of the commodity at the current moment to the price of the commodity at the moment of adding it to the cart is less than 90%. Alternatively, the preset condition may be set to include that there are no marketing events available for the commodity at the moment of adding it to the cart, and there are marketing events available for the commodity at current moment. The marketing events may be the use of coupons or full-reduction events. Alternatively, if the set of objects to be processed is a set of objects historically added to cart by the user, the preset condition may be set to include that the commodity is added to cart within a set time period (for example, 7 days) starting from the current moment to previous time.

In practice, one or more preset conditions may be constructed. When multiple preset conditions are constructed, the relationship between different preset conditions may be "AND", or may be a "OR" relationship, which is not limited in this application.

The number of the objects to be recommended is not limited in this application, optionally, the number of the objects to be recommended may be at least one, for example, one, two, or three objects to be recommended.

S130: Displaying an object summary display page in response to a first selection on the second feed, where the object summary display page includes attribute information of an object to be processed in the set of objects to be processed.

The first selection on the second feed may be, for example, an operation for triggering further display of an object summary display page. The user performs the first selection on the second feed, meaning that the user is interested in the object to be recommended, and wants to learn more about the object to be recommended. Optionally, the first selection on the second feed includes, but is not limited to, a click operation or a sliding operation on the second feed.

The attribute information of the object is the information used to describe all or part of attributes of the object. In some embodiments, the attribute information of the object may be displayed in the display object summary display page in the form of a commodity card.

In some cases, in the set of objects to be processed, due to the change information of the target attribute meeting the preset condition, a part of the objects may be used as the object to be recommended, and due to the change information of the target attribute not meeting the preset condition, the other object may not be used as the object to be recommended and as the object not to be recommended. Optionally, the object summary display page includes attribute information of the object to be processed in the set of objects to be processed and attribute information of the object not to be recommended.

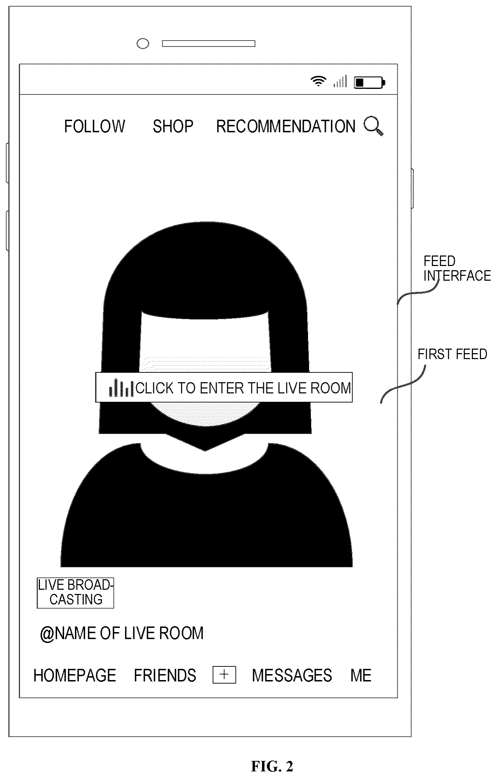

FIGS. 2-4 are schematic diagrams of a client display interface provided in an embodiment of the present disclosure. It is assumed that the set of objects to be processed is a set composed of commodities in the shopping cart. The set preset condition includes condition 1, condition 2, and condition 3. The relationship between the condition 1, the condition 2, and the condition 3 is "and", that is, for the commodity in the shopping cart, the commodity is determined as the object to be recommended only when the condition 1, the condition 2 and the condition 3 are met at the same time. The condition 1 is that the time length from the moment when the commodity is added to the shopping cart to the current moment is less than 7 days; the condition 2 is that the final price of the commodity at the moment when it is added to the shopping cart is less than the final price at the current moment; the condition 3 is that the final price of the commodity at the moment when it is added to the shopping cart is greater than a set price threshold (for example, 10 RMB). The final price refers to the price of the commodity after considering the participating promotion events. For example, if the commodity is a commodity with a slashed price, then the price after the slash will be taken as the final price. If the commodity is a commodity eligible for a preferential price, then the price of the commodity after applying the preferential price will be taken as the final price. If the commodity is a commodity which can participate in full-reduction events, then the price of the commodity after participating in the full-reduction events will be taken as the final price.

Assuming that there are 5 commodities in the shopping cart, 3 commodities to be recommended are determined based on the screening condition, and then the second feed including the change information of target attribute of the 3 commodities to be recommended may be generated. The second feed is inserted into the feed playback sequence, so that the second feed is arranged after the first feed.

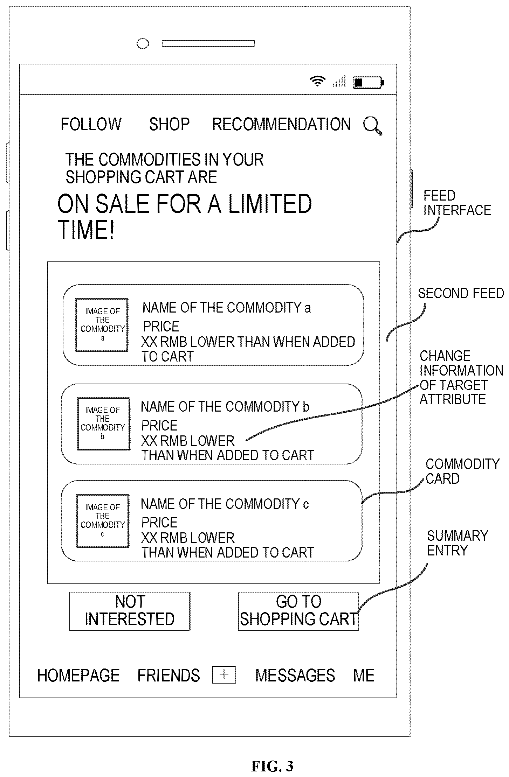

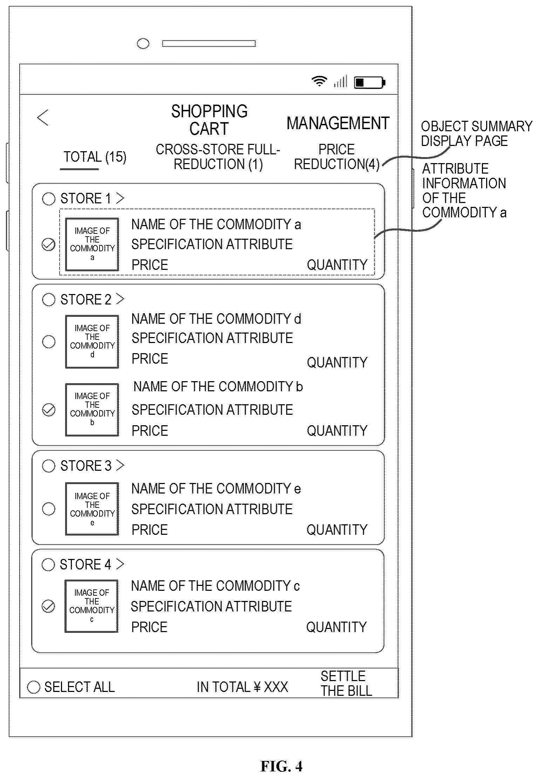

Referring to FIG. 2, a first feed is displayed in the client feed interface. In FIG. 2, the first feed is a live room preview page. When the user performs an upward sliding operation on the feed interface in FIG. 2, the feed interface will display the second feed, as shown in FIG. 3, and the first feed is no longer displayed. It is assumed that the commodity to be recommended is commodity a, commodity b, and commodity c. The second feed includes change information of target attribute of the commodity a, change information of target attribute of the commodity b, and change information of target attribute of the commodity c. When the user performs a first selection on the second feed in FIG. 3, an object summary display page will be displayed, referring to FIG. 4. In this example, the object summary display page is a shopping cart page. In the shopping cart page, attribute information of 5 commodities is included. The attribute information of the 5 commodities includes attribute information of the commodity a, attribute information of the commodity b, and attribute information of the commodity c.

According to the technical solution, by configuring to: switch the first feed in the feed interface to the second feed in response to the trigger operation on the feed interface, where the second feed comprises change information of target attribute of an object to be recommended, where the object to be recommended is an object in the set of objects to be processed, and the change information of the target attribute of the object to be recommended meets a preset condition; display the object summary display page in response to the first selection on the second feed, where the object summary display page comprises attribute information of the object to be processed in the set of objects to be processed, the substance of which is presenting the change information of target attribute of the object to be recommended in the feed interface in a flow manner, so that the user does not need to specially enter the object summary display page to check which objects have changed target attributes, thereby in the process of browsing the feed, the target attribute of which objects in the set of objects to be processed have been changed can be quickly understood, the purpose of transparent transmission of the change condition of the target attribute of the object to be recommended can be achieved, and then the interest of further processing the object to be recommended by the user can be stimulated.

Based on the foregoing technical solution, optionally, the number of the objects to be recommended is one or more, and in the object summary display page, the attribute information of the at least one object to be recommended is in the selected state, and the object to be recommended of which attribute information is in the selected state is the object to be recommended that needs to be placed in an order.

The attribute information of the object to be recommended is in the selected state, which means that the attribute information of the object to be recommended is marked, such that the attribute information of the object to be recommended is highlighted in the object summary display page, so that the user can quickly find the attribute information of the object to be recommended in the object summary display page. In addition, if the user has the intention to purchase the object to be recommended, because the attribute information of the object to be recommended is in the selected state, the client will assume that the user wants to purchase the object to be recommended with the attribute information being in the selected state. Further, if the user clicks on the control with order placement function in the object summary display page, the object with the attribute information being in the selected state will be used as the purchase object, and an order confirmation page will be generated.

The order confirmation page refers to a page that is presented to the user by aggregating the attribute information of all the objects that need to be purchased, and the order confirmation page is the last page to confirm information with the user before placing an order. After displaying the order confirmation page, the terminal will proceed to guide the user to pay for the order.

Optionally, the first selection on the second feed may be classified into two types: the first type is a selection of the second feed as a whole, in this triggering mode, it is assumed that the user wants to know all the objects to be recommended in the second feed, and the user does not express a higher interest in which object to be recommended. The second type is a triggering a certain object to be recommended in the second feed, and in triggering mode, it is assumed that the user is more interested in the selected object to be recommended.

Based on the above analysis, in one embodiment, optionally, the second feed includes a summary entry, and if the first selection is a selection on the summary entry, in the object summary display page, all the attribute information of objects to be recommended is in a selected state.

The summary entry may be, for example, a control or area capable of displaying the object summary display page. Exemplarily, referring to FIG. 3, the summary entry may be a "go to shopping cart" control in the second feed, or an area in the second feed except for the area occupied by the commodity card, an area occupied by the "go to shopping cart" control, and a remaining area outside the area occupied by the "not interested" control.

Exemplarily, referring to FIG. 3, the object to be recommended includes a commodity a, a commodity b, and a commodity c. After the user clicks on the "go to shopping cart" control in FIG. 3, in FIG. 4, the circle in front of the attribute information of the commodity a, the attribute information of the commodity b, and the attribute information of the commodity c are all checked. The checked circle in front of the attribute information indicates that the attribute information is in the selected state.

In another embodiment, optionally, if the first selection is a selection on one object to be recommended, in the object summary display page, the attribute information of the selected object to be recommended will be in a selected state.

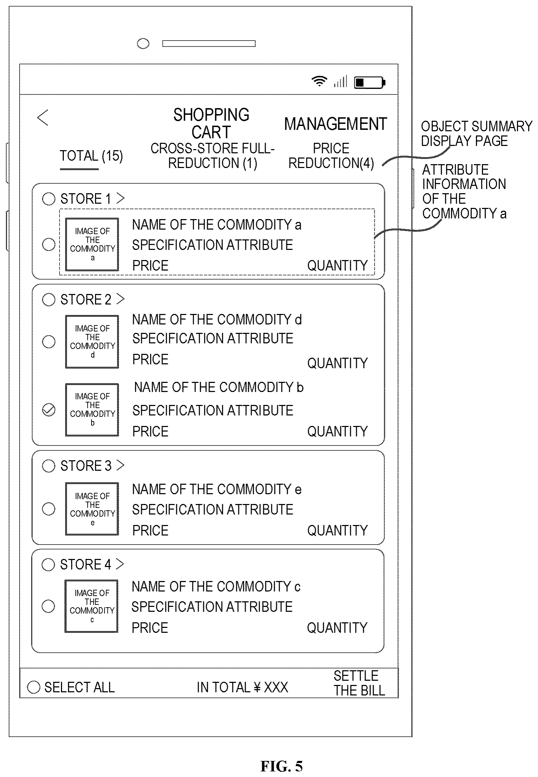

Exemplarily, FIG. 5 is a schematic diagram of another client interface provided in this application. If the user clicks on the commodity card of the commodity b in FIG. 3, the first selection can be regarded as the selection on commodity b. Referring to FIG. 5, in the object summary display page, the circle in front of the attribute information of the commodity b is checked, indicating that the attribute information of the commodity b is in the selected state. Although the second feed in FIG. 3 further includes a commodity card of the commodity a and a commodity card of the commodity c, because the user selects the commodity card of the commodity b, the circle in front of the attribute information of the commodity a and of the attribute information of the commodity c are not checked in FIG. 5.

By configuring that if the first selection is the selection on the summary entry, in the object summary display page, all the attribute information of the objects to be recommended is in the selected state; or if the first selection is the selection on one object to be recommended, in the object summary display page, the attribute information of the selected object to be recommended is in the selected state, and the purpose is to infer the user intention by identifying the first selection, and then assist the user to quickly find the attribute information of the object to be recommended in the object summary display page, and prepare for the quick purchase of the object to be recommended, thereby improving the user experience.

Further, when there are one or more objects to be recommended, the set of objects to be processed includes the object to be recommended and the object not to be recommended; the change information of the target attribute of the object not to be recommended does not meet the preset condition; the object summary display page is an object display list; the object summary display page further includes attribute information of the object not to be processed in the set of objects to be processed; the second feed includes a summary entry; and if the first selection is a selection on the summary entry, in the object summary display page, the display position of the attribute information of any object to be recommended is located before the display position of the attribute information of the object not to be recommended.

Wherein the object summary display page is an object display list, for example, in the object summary display page, attribute information of each object (including the object to be recommended and the object not to be recommended) is sequentially arranged from top to bottom.

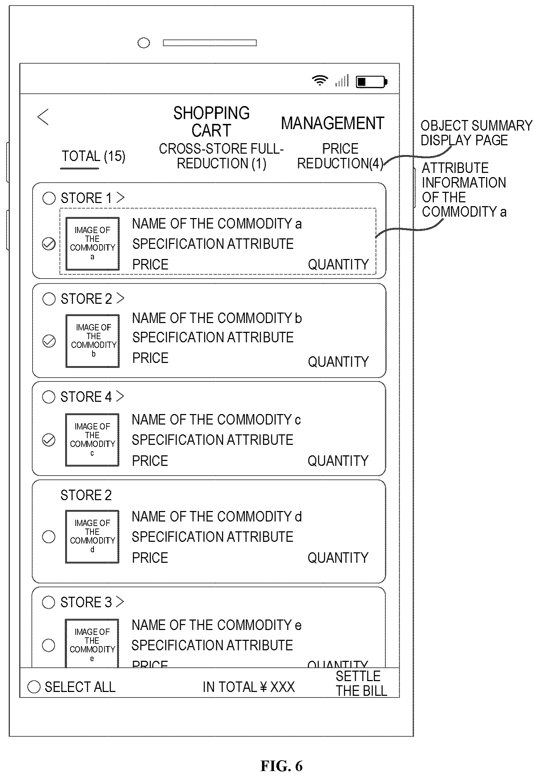

FIG. 6 is a schematic diagram of another client interface provided in this application. Exemplarily, it is assumed that the set of objects to be processed includes the commodity a, the commodity b, the commodity c, the commodity d, and the commodity e. The commodity a, the commodity b, and the commodity c are objects to be recommended, and the commodity d and the commodity e are objects not to be recommended. After the user clicks on the "go to shopping cart" control in FIG. 3, in FIG. 6, the display position of the attribute information of the commodity a, the attribute information of the commodity b, and the attribute information of the commodity c are all located before the display position of the attribute information of the commodity d and the attribute information of the commodity e.

Further, if the second feed includes change information of target attribute of two or more objects to be recommended. The arrangement order of the change information of target attribute of the two or more objects to be recommended in the second feed may be the same or different with the arrangement order of the attribute information of the object to be recommended in the object summary display page.

Exemplarily, the change information of target attribute of the object to be recommended in FIG. 3 is arranged in an order of the commodity a, the commodity b, and the commodity c, and in FIG. 6, the attribute information is also arranged in an order of the commodity a, the commodity b, and the commodity c.

In another embodiment, if the first selection is a selection on one object to be recommended, in the object summary display page, the attribute information of the selected object to be recommended is located at the first display position of the object display list. A first display position may be, for example, the first position of display from top to bottom.

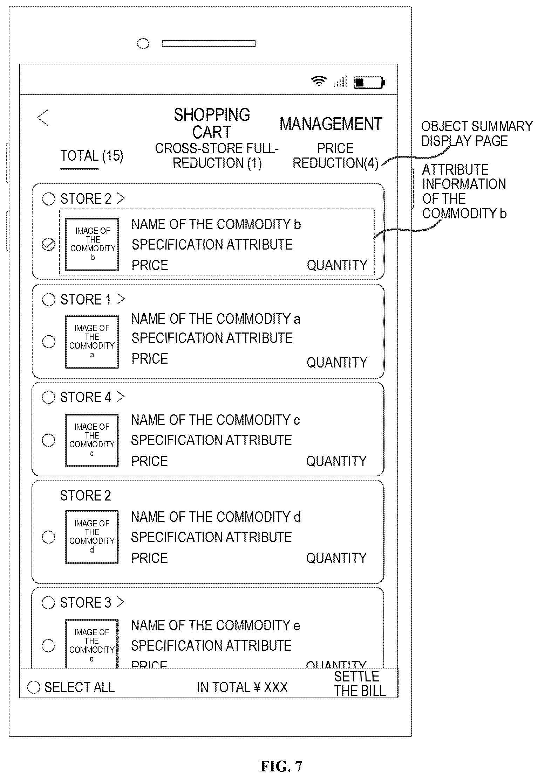

Exemplarily, FIG. 7 is a schematic diagram of another client interface provided in this application. If the user clicks on the commodity card of the commodity b in FIG. 3, the first selection can be regarded as the selection on commodity b. Referring to FIG. 7, in the object summary display page, the attribute information of the commodity b is located at a first display position of the object display list.

By configuring that if the first selection is the selection on the summary entry, in the object summary display page, the display position of the attribute information of any object to be recommended is located before the display position of the attribute information of the object not to be recommended; or if the first selection is the selection on one object to be recommended, in the object summary display page, the attribute information of the selected object to be recommended is located at the first display position of the object display list, and the purpose is to infer the user intention by identifying the first selection, and then assist the user to quickly find the attribute information of the interested object in the object summary display page, thereby improving the user experience.

Based on the foregoing technical solutions, optionally, the number of the objects to be recommended is one or more, and the at least one object to be recommended is associated with the promotion information; in response to the first selection on the second feed, displaying the object summary display page includes: in response to the first selection on the second feed, displaying the object summary display page and the promotion detail page; the promotion detail page includes promotion information associated with the object to be recommended; and in response to the selection on the promotion information, closing the promotion detail page.

The promotion information may be, for example, information added to the object to be recommended and used to improve popularity of the object to be recommended in users. Optionally, the promotion information includes description information of the promotion activity. The promotion activity may be, for example, a marketing event for increasing the sales of the commodities. Exemplarily, the promotion information may be a coupon corresponding to the object to be recommended.

The promotion detail page may be, for example, a page for summarizing and displaying promotion information associated with each object to be recommended.

The selection on the promotion information may be, for example, an operation that expresses participating in the promotion activity described in the promotion information. Exemplarily, if the promotion information is a coupon corresponding to the object to be recommended, the promotion detail page is a coupon acquisition page, and the selection on the promotion information is an operation to get the coupon.

Optionally, in some embodiments, there are at least two objects to be recommended associated with the promotion information and the promotion information is in a one-to-one correspondence with the objects to be recommended. The promotion detail page includes promotion information of all objects to be recommended associated with the promotion information.

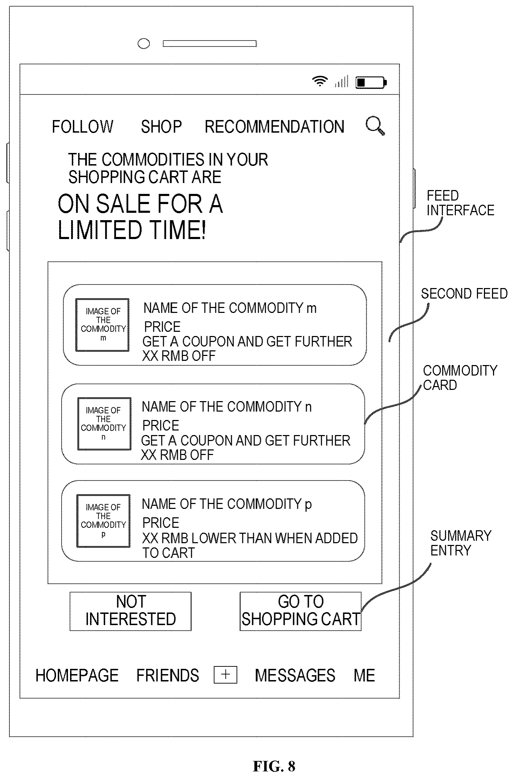

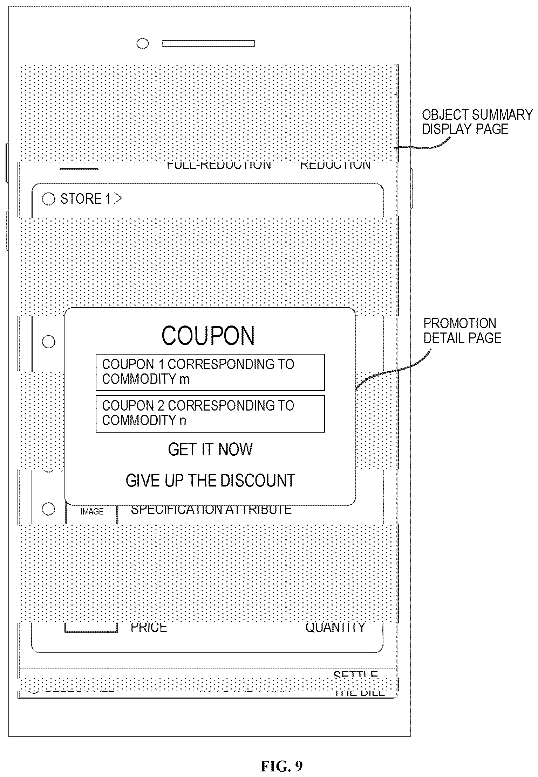

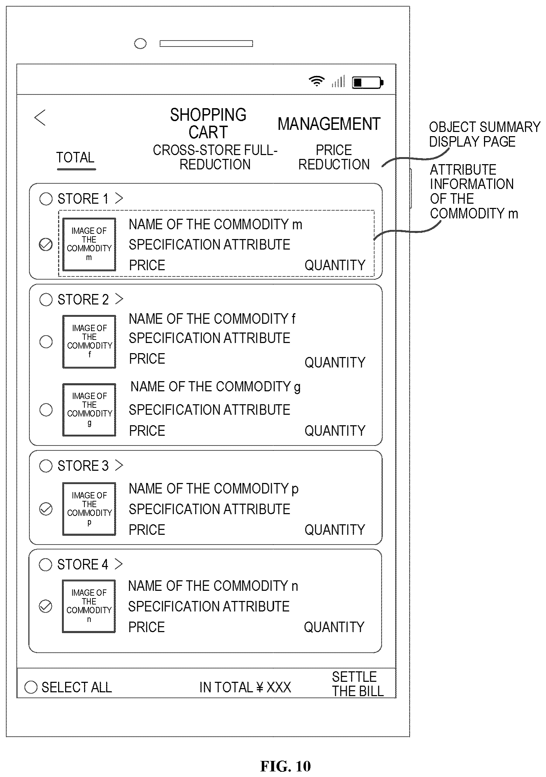

FIGS. 8-10 are schematic diagrams of another three client interfaces provided in this application. Exemplarily, it is assumed that the commodity m, the commodity n, and the commodity p are all objects to be recommended, the commodity m is associated with the coupon 1, and the commodity n is associated with the coupon 2. Commodity p is not associated with a coupon. After the user clicks on the "go to shopping cart" control in FIG. 8, referring to FIG. 9, a coupon acquisition page and an object summary display page are displayed. Here, the coupon acquisition page is a promotion detail page. The object summary display page is a shopping cart page. The promotion detail page includes the coupon 1 associated with the commodity m and the coupon 2 associated with the commodity n. If the user further clicks on the "get coupon" control in the coupon acquisition page in FIG. 9, referring to FIG. 10, the coupon acquisition page is closed, and only the object summary display page is displayed.

By configuring that displaying the object summary display page and the promotion detail page in response to the first selection on the second feed, where the promotion detail page includes the promotion information associated with the object to be recommended, it can help users understand the specific content of the promotion information of the object to be recommended more clearly and help improve the user experience.

Optionally, it is also possible to configure that displaying the object summary display page and the promotion detail page in response to the first selection on the second feed, which includes:
displaying the object summary display page, the promotion detail page and the mask layer in response to the first selection on the second feed, wherein the object summary display page is located below the mask layer, and the promotion detail page is located above the mask layer; closing the promotion detail page in response to the selection on the promotion information, including: closing the promotion detail page and removing the mask layer in response to a selection on the promotion information. Exemplarily, with continued reference to FIG. 9, the mask layer is a layer filled with dots in FIG. 9. Since the mask layer is located above the object summary display page, the object summary display page can be blurred, and the promotion information is located above the mask layer, so that the promotion information is highlighted, the mixed information is avoided, otherwise the user cannot quickly identify which information is promotion information and which is not, and the user can be helped to quickly understand the content of the promotion information.

In some other embodiments, optionally, if the first selection is a selection on one object to be recommended, if the selected object to be recommended is associated with promotion information, the promotion detail page only includes promotion information associated with the selected object to be recommended.

Assuming that both the commodity m and the commodity n are associated with a coupon, and after the user clicks on the commodity card of the commodity m in the second feed, the coupon acquisition page is displayed. The coupon acquisition page is a promotion detail page. The coupon acquisition page only includes the coupon corresponding to the commodity m. If the user further clicks on the "get coupon" control in the coupon acquisition page, the user will get the coupon corresponding to the commodity m, and the object summary display page will be displayed. In the object summary display page, only the attribute information corresponding to the commodity m is in the selected state. In this way, the user can be helped to more clearly understand the specific content of the promotion information associated with the selected object to be recommended, and thus improve the user experience.

Based on the foregoing technical solutions, optionally, before S110, the method further includes: when it is detected that a change condition of a target attribute of at least one object in the set of objects to be processed meets a preset condition, determining the object of which change condition of the target attribute meets a preset condition as the object to be recommended; based on the change condition of the target attribute of the object to be recommended, generating a second feed; and inserting the second feed into the feed playback sequence.

Since the object in the set of objects to be processed can be regarded as an object of interest to the user, while the user's intention of the next step to process the object (such as purchasing willingness) is not strong enough, when the change condition of the target attribute meets the preset condition, it means that the attractiveness of the object to be recommended to the user can change accordingly, thus generating the second feed which reflects the change condition of the target attribute of the object to be recommended can ensure that the change information of target attribute reaches the user efficiently and timely, thereby increasing the probability of the object to be recommended being processed in the next step.

Based on the foregoing technical solution, optionally, the method further includes: in a process of displaying the second feed, playing background audio information associated with the second feed. In this way, the fun of the second feed display can be improved.

Based on the foregoing technical solution, optionally, the method further includes: in response to an instruction for exiting the object summary display page, closing the object summary display page, and displaying the second feed again in the feed interface. The purpose of this configuration is to provide a switching mechanism from the object summary display page back to the second feed, so as to improve the consistency of the user when browsing the feed.

Based on the foregoing technical solutions, optionally, in response to a second selection on the second feed, adjusting a proportion of the second feed in the feed playback sequence. The second selection on the second feed may be, for example, an operation to express to the client that the user does not like the second feed. Exemplarily, if the user clicks on the "dislike" control in FIG. 2, it may be regarded as a second selection on the second feed, to reduce a proportion of the second feed in the feed playback sequence. Alternatively, if it is detected that the duration of the client staying in the second feed and the corresponding object summary display page is less than the set time threshold, it may be regarded as a second selection on the second feed, and based on this operation, it indicates that the user does not like the second feed, and the proportion of the second feed in the feed playback sequence is reduced.

Optionally, in the foregoing technical solutions, the object to be recommended is a commodity, the set of objects to be processed is a set composed of commodities in the shopping cart, and the object summary display page is a shopping cart page.

It should be noted that, the embodiments of the present application may involve the use of user data. In actual applications, user-specific personal data can be used in the solutions described herein within the scope permitted by applicable laws and regulations, in compliance with the requirements of applicable laws and regulations of the country where the user is located (for example, with the user's explicit consent, effective notification to the user, etc.).

It should be noted that, for the foregoing method embodiments, for simplicity of description, the embodiments all described as a series of action combinations, but those skilled in the art should understand that the present invention is not limited by the described order of action, as certain steps may be performed in other orders or simultaneously in accordance with the present invention. Secondly, those skilled in the art should also understand that the embodiments described in the specification are all preferred embodiments, and the actions and modules involved are not necessarily required by the present invention.

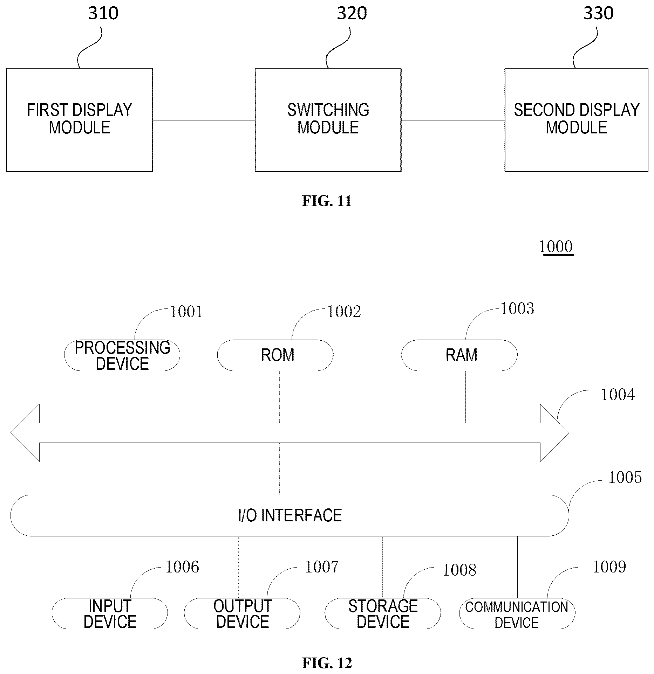

FIG. 11 is a schematic structural diagram of an interaction device in an embodiment of the present disclosure. The interaction device provided in the embodiments of the present disclosure may be configured in a client. Referring to FIG. 11, the interaction apparatus specifically includes:
a first display module 310 configured to display a first feed in a feed interface;
a switching module 320, configured to switch the first feed in the feed interface to a second feed in response to a trigger on the feed interface, where the second feed includes change information of target attribute of an object to be recommended, the object to be recommended is an object in a set of objects to be processed, and the change information of the target attribute of the object to be recommended meets a preset condition;
a second display module 330, configured to display an object summary display page in response to a first selection on the second feed, where the object summary display page includes attribute information of an object to be processed in the set of objects to be processed.

Further, the number of the objects to be recommended is one or more, and in the object summary display page, the attribute information of the at least one object to be recommended is in a selected state, and the object to be recommended of which attribute information is in the selected state is an object to be recommended that needs to be placed in an order.

Further, the second feed includes a summary entry, and if the first selection is a selection on the summary entry, in the object summary display page, all the attribute information of the objects to be recommended is in a selected state; or
if the first selection is a selection on one object to be recommended, in the object summary display page, the attribute information of the selected object to be recommended is in a selected state.

Further, the number of objects to be recommended is one or more, and the set of objects to be processed includes an object to be recommended and an object not to be recommended; the change information of the target attribute of the object not to be recommended does not meet the preset condition; the object summary display page is an object display list; and the object summary display page further includes attribute information of the object not to be processed in the set of objects to be processed.

The second feed includes a summary entry, and if the first selection is a selection on the summary entry, in the object summary display page, the display position of the attribute information of any one of the objects to be recommended is located before the display position of the attribute information of the object not to be recommended; or
if the first selection is a selection on one object to be recommended, in the object summary display page, attribute information of the selected object to be recommended is located at a first display position of the object display list.

Further, the number of the objects to be recommended is one or more, and at least one object to be recommended is associated with promotion information; and a second display module 330 configured to:
displaying an object summary display page and a promotion detail page in response to a first selection on the second feed, where the promotion detail page includes the promotion information associated with the object to be recommended;
closing the promotion detail page in response to a selection on the promotion information.

Further, the device further includes a second feed generating module, configured to:
before displaying the first feed in the feed interface, when it is detected that there is at least one object in the set of objects to be processed of which change condition of the target attribute meets a preset condition, determining the object of which change condition of the target attribute meets a preset condition as the object to be recommended;
generating a second feed based on the change condition of the target attribute of the object to be recommended;
inserting the second feed into a feed playback sequence.

Further, the object to be recommended is a commodity, the set of objects to be processed is a set composed of commodities in a shopping cart, and the object summary display page is a shopping cart page.

The interaction device provided in the embodiment of the present disclosure may perform the steps performed by the client in the interaction method provided in the method embodiments of the present disclosure, and has perform steps and beneficial effects, which will not be repeated here.

FIG. 12 is a schematic structural diagram of an electronic apparatus according to an embodiment of the present disclosure. FIG. 12 is a schematic structural diagram of an electronic apparatus 1000 suitable for implementing the embodiments of the present disclosure. The electronic apparatus 1000 in the embodiments of the present disclosure may include, but is not limited to, a mobile terminal such as a mobile phone, a notebook computer, a digital broadcast receiver, a PDA (personal digital assistant), a PAD (tablet computer), a PMP (portable multimedia player), an in-vehicle terminal (for example, an in-vehicle navigation terminal), a wearable electronic device, and the like, and a fixed terminal such as a digital TV, a desktop computer, a smart home device, or the like. The electronic device shown in FIG. 12 is merely an example, and should not impose any limitation on the functions and scope of use of the embodiments of the present disclosure.

As shown in FIG. 12, the electronic device 1000 may include a processing device (for example, a central processing unit, a graphics processor, etc.) 1001, which may perform various appropriate actions and processes according to a program stored in a read-only memory (ROM) 1002 or a program loaded into a random access memory (RAM) 1003 from a storage device 1008 to implement the interaction method according to the embodiments of the present disclosure. In the RAM 1003, various programs and information required by the operation of the electronic apparatus 1000 are also stored. The processing device 1001, the ROM 1002, and the RAM 1003 are connected to each other through a bus 1004. Input/output (I/O) interface 1005 is also connected to bus 1004.

Generally, the following devices may be connected to the I/O interface 1005: an input device 1006 including, for example, a touch screen, a touchpad, a keyboard, a mouse, a camera, a microphone, an accelerometer, a gyroscope, etc.; an output device 1007 including, for example, a liquid crystal display (LCD), a speaker, a vibrator, etc.; a storage device 1008 including, for example, a magnetic tape, a hard disk, etc.; and a communication device 1009. The communication device 1009 may allow the electronic device 1000 to communicate wirelessly or wired with other apparatus to exchange information. While FIG. 12 shows an electronic apparatus 1000 having various devices, it should be understood that it is not required to implement or have all illustrated devices. More or fewer devices may alternatively be implemented or provided.

In particular, according to an embodiment of the present disclosure, the process described above with reference to the flowchart may be implemented as a computer software program. For example, embodiments of the present disclosure include a computer program product including a computer program carried on a non-transitory computer readable medium, the computer program including program code for performing the method shown in the flowchart to implement the interaction method as described above. In such embodiments, the computer program may be downloaded and installed from the network through the communication device 1009, or installed from the storage device 1008, or from the ROM 1002. When the computer program is executed by the processing apparatus 1001, the foregoing functions defined in the method of the embodiments of the present disclosure are performed.

It should be noted that the computer-readable medium described above may be a computer readable signal medium, a computer readable storage medium, or any combination thereof. The computer-readable storage medium may be, for example, but not limited to, an electrical, magnetic, optical, electromagnetic, infrared, or semiconductor system, apparatus, or device, or any combination thereof. More specific examples of computer-readable storage medium may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or device. In the present disclosure, a computer readable signal medium may include an information signal propagated in baseband or as part of a carrier, where the computer readable program code is carried. Such propagated information signals may take a variety of forms including, but not limited to, electromagnetic signals, optical signals, or any suitable combination thereof. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted with any suitable medium, including, but not limited to: wires, optical cables, RF (radio frequency), and the like, or any suitable combination thereof.

In some implementations, the client, server may communicate using any known or future developed network protocol, such as HTTP (HyperText Transfer Protocol), and may be interconnected with any form or medium of digital information communication (e.g., communication network). Examples of communication networks include local area networks ("LANs"), wide area networks ("WANs"), internets (e.g., the Internet), and peer-to-peer networks (e.g., ad hoc peer-to-peer networks), as well as any known or future developed networks.

The computer-readable medium described above may be included in the electronic apparatus; or may be separately present without being assembled into the electronic apparatus.

The computer-readable medium carries one or more programs, and the one or more programs, when executed by the electronic apparatus, cause the electronic apparatus to:
displaying a first feed in a feed interface;
switching the first feed in the feed interface to a second feed in response to a trigger operation on the feed interface, where the second feed includes change information of target attribute of an object to be recommended; the object to be recommended is an object in a set of objects to be processed, and the change information of the target attribute of the object to be recommended meets a preset condition;
displaying an object summary display page in response to a first selection on the second feed, where the object summary display page includes attribute information of an object to be processed in the set of objects to be processed.

Optionally, when the one or more programs are executed by the electronic apparatus, the electronic apparatus may further perform other steps described in the foregoing embodiments.

Computer program code for performing the operations of the present disclosure may be written in one or more programming languages, including, but not limited to, object oriented programming languages such as Java, Smalltalk, C++, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (e.g., connected through the Internet using an Internet service provider).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware. The name of the unit does not constitute a limitation on the unit itself in some cases.

The functions described above may be performed, at least in part, by one or more hardware logic components. For example, without limitation, exemplary types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, device, or apparatus. The machine-readable medium may be a machine-readable signal medium or a machine-readable storage medium. The machine-readable medium may include, but is not limited to, electronic, magnetic, optical, electromagnetic, infrared, or semiconductor system, device, or apparatus, or any suitable combination thereof. More specific examples of machine-readable storage media may include electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

According to one or more embodiments of the present disclosure, the present disclosure provides an electronic apparatus, including:
one or more processors;
a memory, configured to store one or more programs;
the one or more programs, when executed by the one or more processors, cause the one or more processors implement the interaction method according to any one of the present disclosure.

According to one or more embodiments of the present disclosure, the present disclosure provides a computer-readable storage medium having stored thereon a computer program, which when executed by a processor, implements the interaction method according to any one of the present disclosure.

An embodiment of the present disclosure further provides a computer program product, where the computer program product includes a computer program or an instruction, and the computer program or the instruction, when executed by a processor, implements the interaction method as described above.

It should be noted that, in this specification, relational terms such as "first" and "second" are merely used to distinguish one entity or operation from another entity or operation, and do not necessarily require or imply that any such actual relationship or sequence exists between these entities or operations. Moreover, the terms "including", "comprising" or any other variation thereof are intended to cover a non-exclusive inclusion, such that a process, method, article, or apparatus comprising a series of elements includes not only those elements, but also other elements not expressly listed, or elements inherent to such a process, method, article, or apparatus. Without further restriction, the elements defined by the statement "including one..." do not preclude the presence of additional identical elements in the process, method, article, or apparatus that includes the elements.

The above descriptions are only specific embodiments of the present disclosure, so that those skilled in the art can understand or implement the present disclosure. Various modifications to these embodiments will be apparent to those skilled in the art, the general principles defined herein may be implemented in other embodiments without departing from the spirit or scope of the present disclosure. Accordingly, the present disclosure will not be limited to these embodiments described herein, but is to be accorded the widest scope consistent with the principles and novel features disclosed herein.

## Claims

1. An interaction method comprising:
displaying a first feed in a feed interface;
in response to a trigger on the feed interface, switching the first feed in the feed interface to a second feed; the second feed comprising change information of a target attribute of an object to be recommended; the object to be recommended being an object in a set of objects to be processed, and the change information of the target attribute of the object to be recommended meeting a preset condition;
in response to a first selection on the second feed, displaying an object summary display page, the object summary display page comprising attribute information of an object to be processed in the set of objects to be processed.

2. The method of claim 1, wherein the number of objects to be recommended is one or more, in the object summary display page, the attribute information of at least one of the objects to be recommended is in a selected state, and the object to be recommended of which the attribute information is in the selected state is an object to be recommended that needs to be placed in an order.

3. The method of claim 1, wherein the second feed comprises a summary entry, in response to that the first selection is a selection on the summary entry, all attribute information of the objects to be recommended is in a selected state in the object summary display page; or
in response to that the first selection is a selection on one of the objects to be recommended, attribute information of the selected object to be recommended is in a selected state in the object summary display page.

4. The method of claim 1, wherein the number of objects to be recommended is one or more, and the set of objects to be processed includes an object to be recommended and an object not to be recommended; change information of a target attribute of the object not to be recommended does not satisfy the preset condition; the object summary display page is an object display list; the object summary display page further comprises attribute information of the object not to be processed in the set of objects to be processed.

5. The method of claim 4, wherein the second feed comprises a summary entry, and in response to that the first selection is a selection on the summary entry, a display position of attribute information of any one of the objects to be recommended is located before a display position of attribute information of the object not to be recommended, in the object summary display page.

6. The method of claim 4, wherein in response to the first selection is a selection on one of the objects to be recommended, attribute information of the selected object to be recommended is located at a first display position of the object display list in the object summary display page.

7. The method of claim 1, wherein the number of objects to be recommended is one or more, and at least one object to be recommended is associated with promotion information; and in response to the first selection on the second feed, displaying an object summary display page comprises:
in response to the first selection on the second feed, displaying an object summary display page and a promotion detail page; the promotion detail page comprising the promotion information associated with the object to be recommended;
in response to a selection on the promotion information, closing the promotion detail page.

8. The method of claim 6, wherein in response to the first selection on the second feed, displaying an object summary display page and a promotion detail page comprises:
in response to the first selection on the second feed, displaying the object summary display page, the promotion detail page, and a mask layer; wherein the object summary display page is located below the mask layer, and the promotion detail page is located above the mask layer; in response to the selection on the promotion information, closing the promotion detail page comprising: in response to the selection on the promotion information, closing the promotion detail page, and removing the mask layer.

9. The method of claim 6, wherein in response to that the first selection is a selection on one of the objects to be recommended, and in response to that the selected object to be recommended is associated with the promotion information, the promotion detail page only comprises promotion information associated with the selected object to be recommended.

10. The method of claim 1, wherein before displaying the first feed in the feed interface, the method further comprises:
when it is detected that there is at least one object in the set of objects to be processed of which change condition of the target attribute meets a preset condition, determining the object of which change condition of the target attribute meets a preset condition as the object to be recommended;
generating a second feed based on the change condition of the target attribute of the object to be recommended;
inserting the second feed into a feed playback sequence.

11. The method of claim 10, further comprising:
in response to a second selection on the second feed, adjusting a proportion of the second feed in the feed playback sequence.

12. The method of claim 1, wherein the object to be recommended is a commodity, the set of objects to be processed is a set of commodities in a shopping cart, and the object summary display page is a shopping cart page.

13. An interaction device, comprising:
a first display module for displaying a first feed in a feed interface;
a switching module for in response to a trigger on the feed interface, switching the first feed in the feed interface to a second feed; the second feed comprising change information of a target attribute of an object to be recommended; the object to be recommended being an object in a set of objects to be processed, and the change information of the target attribute of the object to be recommended meeting a preset condition;
a second display module for in response to a first selection on the second feed, displaying an object summary display page, the object summary display page comprising attribute information of an object to be processed in the set of objects to be processed.

14. An electronic device, comprising:
one or more processors;
a storage device for storing one or more programs;
the one or more programs, when executed by the one or more processors, cause the one or more processors to implement the method of any one of claims 1-12.

15. A computer-readable storage medium having stored thereon a computer program which, when executed by a processor, implements the method according to any one of claims 1-12.
